# EUROPÄISCHE PATENTSCHRIFT

(11) **EP 2 206 652 B1**
(45) Veröffentlichungstag und Bekanntmachung des Hinweises auf die Patenterteilung: **05.12.2012**
(21) Anmeldenummer: 10002138.5
(22) Anmeldetag: 10.10.2003
(51) Int. Cl.: B65B 43/28, B65B 43/30, B31B 19/84

(54) **Verfahren zum Trennen von zwei aufeinanderliegenden Folien, und mit dem vorgenannten Verfahren hergestellter Beutel, sowie eine Vorrichtung zur Durchführung des Verfahrens**
Device and method for handling two superimposed films and bag produced according to said method
Procédé et dispositif pour manipuler deux feuilles superposées et sac fabriqué selon ce procédé

(30) Priorität: 14.10.2002 DE 10247769; 15.04.2003 DE 10317375
(43) Veröffentlichungstag der Anmeldung: 14.07.2010
(62) Teilanmeldung aus: 03785614.3
(73) Patentinhaber: Fresenius Medical Care Deutschland GmbH, 61352 Bad Homburg v.d.H. (DE)
(72) Erfinder: Meisinger, Matthias, 66646 Marpingen (DE); Kugelmann, Franz, 66606 St. Wendel/Bliesen (DE)
(74) Vertreter: Laufhütte, Dieter

(56) Entgegenhaltungen:
- EP-A- 1 086 804
- DE-A1- 3 326 616
- DE-A1- 4 315 685
- DE-A1- 19 510 669
- FR-A- 2 716 868
- US-A- 4 484 904
- PATENT ABSTRACTS OF JAPAN Bd. 012, Nr. 152 (M-695), 11. Mai 1988 (1988-05-11) & JP 62 271726 A (TAKAO YOSHIDA), 26. November 1987 (1987-11-26)

## Beschreibung

Die Erfindung betrifft zunächst ein Verfahren zum Handling von zwei aufeinanderliegenden Folien, insbesondere Kunststoffschlauchfolien, mit einem Oberwerkzeug und einem gegenüberliegenden Unterwerkzeug, sowie einem nach diesem Verfahren hergestellten Beutel. Das Handling betrifft einerseits das Trennen von Folien und andererseits das Einformen von mindestens zwei Schläuchen oder Ports in eine Schlauchfolienbahn.

Schlauchfolien werden im Verpackungsbereich in großem Umfang verwendet. Im medizinischen Bereich werden sie bevorzugt zur Herstellung von Beutelsystemen herangezogen, die hohe Ansprüche hinsichtlich Sterilität und Partikelarmut stellen. Der Vorteil von Schlauchfolien liegt darin, daß die Folien in Folge des Herstellungsprozesses geschlossen und somit "keimfrei" produziert und gelagert werden können. Auch bleibt bei der weiteren Verarbeitung die Partikelbelastung im Inneren des Beutels äußerst gering, da nur an den jeweils spezifischen Stellen ein kurzzeitiger Zugang geschaffen werden muß, um einen Port einzubringen.

Bei der Verarbeitung der Schlauchfolien bereitet insbesondere das Öffnen der Folien, aufgrund der starken Hafteigenschaft der Folienseiten zueinander erhebliche Schwierigkeiten.

Im Stand der Technik sind bereits Vorrichtungen zum Trennen von zwei aneinanderliegenden Folien beschrieben. So ist aus der DE 43 15 685 A1 eine entsprechende Vorrichtung bekannt, bei der entsprechende Oberwerkzeuge bzw. Unterwerkzeuge oberhalb bzw. unterhalb der auseinander zu ziehenden Folienhälften angeordnet sind. Diese entsprechenden Oberwerkzeuge bzw. Unterwerkzeuge weisen Saugnäpfe auf, um die jeweiligen Folienhälften anzusaugen und durch Auseinanderbewegung der Saugnäpfe auseinander zu ziehen. Diese Vakuumsauger können allerdings nicht für alle Folientypen, aus denen die entsprechenden Schlauchfolien hergestellt sind, eingesetzt werden. Sie müssen in anderer Weise mechanisch geöffnet werden.

Ferner wird in DE 33 26 616 A1, DE 195 10 669 A1, FR 2 716 868 A, EP 1 086 804 A2, US 4,484,904 A und JP 62271726 A ein Verfahren zum Trennen von zwei aufeinanderliegenden Folien und/oder ein Beutel und/oder eine Vorrichtung zum Trennen von zwei aufeinanderliegenden Folien offenbart.

Aufgabe der Erfindung ist es, ein Verfahren zum Einformen von mindestens zwei Schläuchen oder Ports in eine Schlauchfolienbahn zu schaffen.

Erfindungsgemäß wird die Aufgabe entsprechend der Lehre des Anspruchs 1 gelöst.

Erfindungsgemäße Ausgestaltungen der Erfindung ergeben sich aus den sich an den Hauptanspruch anschließenden Unteransprüchen.

Die Erfindung betrifft auch eine Vorrichtung zur Durchführung des vorgenannten Verfahrens, gemäß anspruch 5.

Mit dem erfindungsgemäßen Verfahren nach Anspruch 1 können, wie im folgenden dargestellt werden wird, in vorteilhafter Weise auch zwei Schläuche oder Ports in eine Schlauchfolienbahn eingeformt werden.

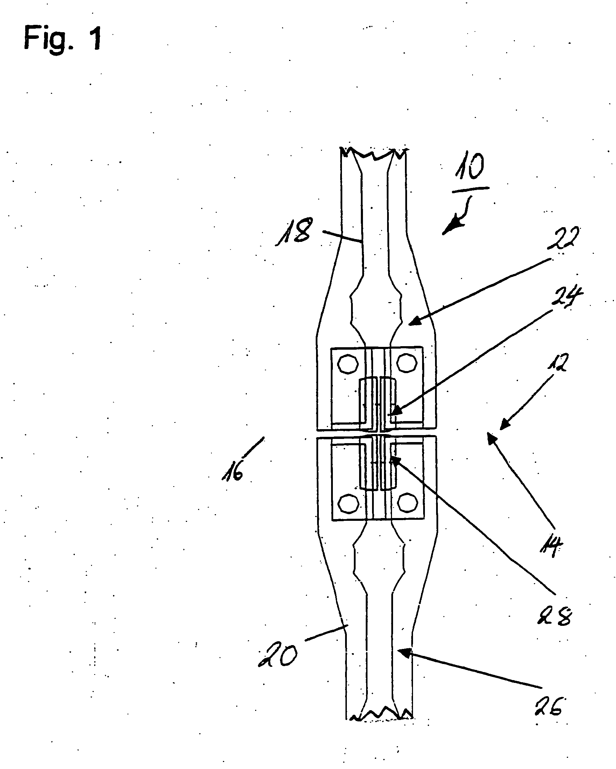

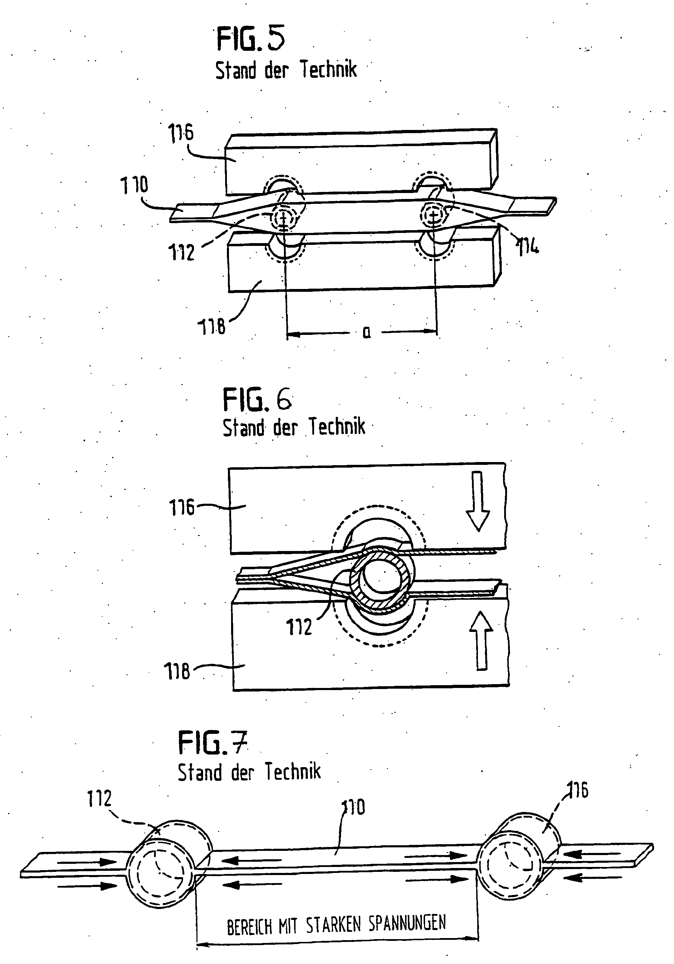

Nach dem Stand der Technik geschieht das Einformen mehrerer Schlauchanschlüsse oder Ports in der Regel in einem Arbeitsgang und mit einem Schweißwerkzeug. Dabei werden die Schlauchanschlüsse bzw. Ports gemeinsam einer offenen Seite einer Schlauchfolienbahn oder der unverschweißten Seite eines Beutels zugeführt und nach dem Öffnen des Beutels innerhalb der Folie plaziert. Dies wird anhand der Figurenabfolge in den Figuren 1 bis 3 gemäß der beigefügten Zeichnungen näher erläutert. In Fig. 5 sieht man die zwei Backen eines Schweißwerkzeuges 116 und 118 und zwei Schlauchabschnitte 112 und 114, die in einem bestimmten Abstand in einen Schlauchbeutel 110, der in der Mitte auseinandergezogen ist, eingeformt werden sollen. Der Abstand zwischen den Mittelpunkten der Schlauchabschnitte beträgt a. In Fig. 6 ist dargestellt, wie das Oberwerkzeug 116 bzw. das Unterwerkzeug 118 der Schweißwerkzeuge aufeinander zubewegt werden, um die Folien der Schlauchfolienbahn 110 mit dem Schlauch 112 bzw. dem Schlauch 114 (hier nicht dargestellt) zu verschweißen. Die Schlauchanschlüsse 112 und 114 werden hier also gemeinsam einer unverschweißten Seite der Schlauchfolienbahn bzw. eines vorgeschweißten Beutels zugeführt und nach dem Öffnen der Schlauchfolienbahn bzw. des Beutels innerhalb der Folie plaziert. Nach dem Schließen des Schweißwerkzeugs formen sich die Folien der Schlauchfolienbahn 110 um die Schläuche 112 und 114 und verschweißt diese unter Zuführung von Wärme. Der Nachteil dieses Verfahrens besteht darin, dass aus der zweidimensionalen Schlauchfolienbahn ein dreidimensionales Gebilde geformt werden muss. Um den Umfang von Schläuchen oder Einschweißteilen einzuformen, wird Folienmaterial aus den Randbereichen benötigt und vom Schweißwerkzeug auch teilweise eingezogen. Da aber zwischen den Schläuchen 112, 114 bzw. Ports kein Folienmaterial nachrutschen kann, da das sich schließende Schweißwerkzeug 116, 118 aufgrund der zur Schweißung nötigen Verpressung dies verhindert, bilden sich Dünnstellen in der Folie aus, d. h. Bereiche mit sehr hoher Eigenspannung am Schlauch oder Tiefziehungen. Diese Dünnstellen führen bei Belastung des Beutels zu vorzeitigem Versagen, d. h. zur Undichtigkeit bzw. zum Aufreißen an diesen belasteten Stellen. Anhand der Fig. 7 ist dies schematisch dargestellt. Hier ist im Bereich zwischen den eingeschweißten Schläuchen ein Bereich mit starken Spannungen dargestellt.

Hier stellt sich die zusätzliche Aufgabe, das vorbekannte Verfahren zum Einformen von mindestens zwei Schläuchen oder Ports in eine Schlauchfolienbahn oder einen vorgefertigten Beutel dahingehend zu verbessern, dass die fertigen Beutel vergleichsweise höheren Belastungen standhalten.

Erfindungsgemäß wird dieses Verfahren ausgehen von einem gattungsgemäßen Verfahren zum Einformen von mindestens zwei Schläuchen oder Ports in eine Schlauchfolienbahn durch die Kombination der Merkmale des Anspruchs 1 gelöst.

Durch das Erfassen der einzelnen aufeinanderliegenden Folien mit je einem Greifer mit Oberwerkzeug und Unterwerkzeug können die Folien in dem Bereich, in dem die Schläuche bzw. Ports eingebracht werden sollen, gerade soweit auseinandergezogen werden, dass hier ein genügender Freiraum zum Einbringen der Schläuche bzw. Ports vorgegeben ist. Durch das lokale Auseinanderziehen sind also Öffnungsbereiche geschaffen, die im wesentlichen dem Außenumfang der in der Regel runden Schläuche bzw. Ports entsprechen. Damit ergibt sich beim Aufsetzen der Schweißbacken bereits ein geringerer Bedarf an Folienlänge, der zum Umfassen des Schlauchs bzw. Ports während des Schweißvorgangs notwendig ist. Hierdurch wird ein Dehnen der Folie beim Schweißvorgang weitestgehend verhindert. Besonders vorteilhafte Ausgestaltungen des Verfahrens ergeben sich aus den sich an den Hauptanspruch anschließenden Unteransprüchen.

Erfindungsgemäß werden die Greifer nach dem jeweiligen Ergreifen der Schlauchfolienbereiche um einen bestimmten Betrag aufeinander zubewegt , so dass sich zwischen den Greifern und damit zwischen den später einzubringenden Schläuchen bzw. Ports eine Falte mit einem Folienvorrat bildet, der beim entsprechenden Schweißvorgang, d. h. dem entsprechenden Umgreifen der Schläuche bzw. Ports durch die Schweißbacken aufgebraucht werden kann. Hierdurch werden zusätzlich die Bereiche starker Spannungen zwischen den Schläuchen bzw. Ports vermieden.

Vorteilhaft werden die Schläuche bzw. Ports durch einen Schweißvorgang mit der sie umgebenden Folie verbunden.

Die Greifer erfassen die Folien vorteilhaft an einer Stelle, die den gewünschten späteren Abstand zwischen den Schläuchen bzw. Ports einerseits zuzüglich des Bereichs, um den die Greifer aufeinander zubewegt werden sollen, entspricht.

Gemäß einer weiteren vorteilhaften Ausgestaltung der Erfindung wird eine Schlauchfolienbahn vor dem Ergreifen mit den jeweiligen Greifern bereits weitgehend in ihren Randbereichen verschweißt, wobei diejenigen Randbereiche freigelassen werden, die durch die Greifer zum Einbringen der Schläuche bzw. Ports freigelassen werden sollen. Hierdurch ist es sichergestellt, dass beim Aufziehen der Bereiche, in welche die Schläuche bzw. Ports eingeschoben werden sollen, nicht die Folien insgesamt voneinander getrennt werden, so dass tatsächlich nur der Bereich der Folien voneinander getrennt wird, der ungefähr dem Außendurchmesser des Schlauchs bzw. Ports entspricht.

Weitere Einzelheiten und Vorteile der Erfindung werden anhand eines in der Zeichnung dargestellten Ausführungsbeispiels näher erläutert. Es zeigen:
- Figur 1:: eine Gesamtdarstellung eines Ausführungsbeispiels der erfindungsgemäßen Vorrichtung in schematischer Darstellung,
- Figur 2:: ein Detail der Greifplatten der Vorrichtung gemäß Figur 1 in aufgesetzter aber noch geöffneter Stellung des Greifers,
- Figur 3:: die Greifplatten gemäß Figur 2 in geschlossener Stellung,
- Figur 4:: die Greifplatten gemäß Figur 2 und 3 in geschlossener und voneinander wegbewegter Stellung,
- Fig. 5 - 7:: Darstellungen des Verfahrens nach dem Stand der Technik wie es in der Beschreibungseinleitung erläutert wurde,
- Fig. 8:: die perspektivische schematische Darstellung einer Schlauchfolienbahn nach dem Ergreifen durch die Greifer,
- Fig. 9:: eine Darstellung gemäß Fig. 8, nachdem die Greifer um eine bestimmte Länge Δx aufeinander zubewegt sind und
- Fig. 10:: eine geschnittene perspektivische Darstellung des Randbereichs eines Beutels mit zwei eingeschweißten Schlauchstücken.

In Figur 1 ist eine Vorrichtung 10 zum Trennen einer oberen Folienlage 12 und einer unteren Folienlage 14 einer Kunststoffschlauchfolie 16 gezeigt. Die Vorrichtung 10 besteht aus einem Oberwerkzeug 18 zum Greifen der oberen Folienlage 12 und einem Unterwerkzeug 20 zum Greifen der unteren Folienlage 14. Das Oberwerkzeug 18 weist eine Greifgabel 22 auf, an der jeweils Greifplatten 24 angeordnet sind. Das Unterwerkzeug 20 weist eine Greifgabel 26 auf, an deren freien Enden jeweils Greifplatten 28 angeordnet sind.

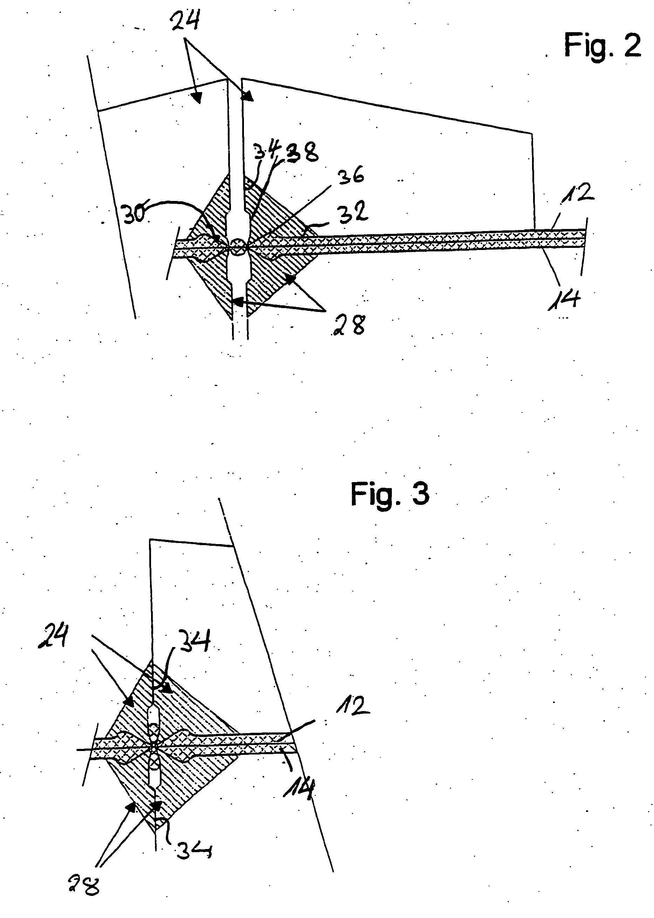

In Figur 2 werden die oberen Greifplatten 24 des Oberwerkzeugs 18 sowie die Greifplatten 28 des Unterwerkzeugs 20 im Detail dargestellt. Die Greifplatten 24 und 28 weisen jeweils asymmetrisch geformte Schneiden 30 auf, sowie plane Anlageflächen 32 in der Waagerechten bzw. 34 in der Senkrechten Ebene. Gegenüber der waagerechten Anlagefläche 32 bzw. der senkrechten Anlagefläche 34 sind jeweils zurückspringende Ausnehmungen 36 bzw. 38 vorgesehen. Wie in der Figur 2 dargestellt, sind die jeweiligen Schneiden 30 der vier Greifplatten aufeinander zugerichtet.

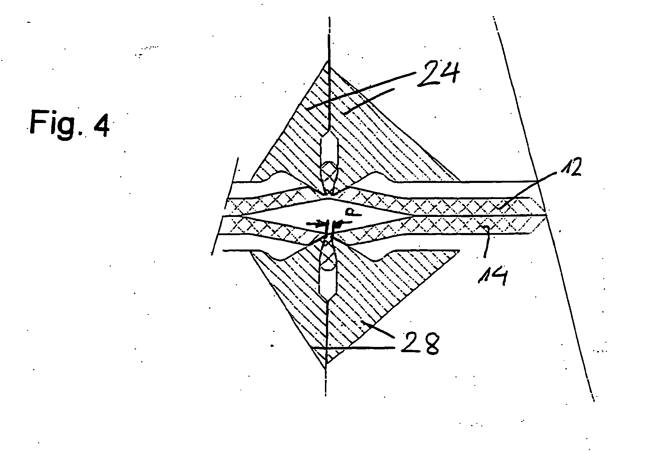

In Figur 2 sind die Greifplatten 24 bzw. 28 auf die Oberflächen der oberen Folienlage 12 bzw. der unteren Folienlage 14 aufgesetzt, so daß die jeweiligen waagerechten Anlageflächen 32 auf der Oberfläche der Schlauchfolie aufliegen. Die entsprechend über die Oberfläche 32 hinausragenden Schneiden 30 sind in dieser Stelle in den vergleichsweise weichen Kunststoff eingedrückt, so daß sich die Bereiche vor und hinter der Schneide entsprechend verformen und in die Ausnehmungen 36 bzw. 38 verdrängt werden. In der entsprechenden Figur 3 sind die senkrechten Anlageflächen 34 der Greifplatten 24 bzw. 28 aneinanderliegend dargestellt, da die Greifgabeln 22 bzw. 26 geschlossen sind. Es wird hier deutlich, dass zwischen den Schneiden in einem entsprechend kleinen Zwischenraum, der sich zur Ausnehmung 38 erweitert, Zwickel der oberen Folienlage 12 bzw. der unteren Folienlage 14 eingeklemmt sind. Aufgrund dieser stoffschlüssigen Einklemmung der Zwickel kann, wie in Figur 4 dargestellt, beim entsprechenden Auseinanderziehen von Oberwerkzeug 18 und Unterwerkzeug 20 die obere Folienlage 12 von der unteren Folienlage 14 getrennt werden.

Der Vorteil der Erfindung liegt darin, daß durch die besondere Schneidengeometrie problemlos Folien unterschiedlicher Dicke mit einer Einstellung geöffnet werden können. Erreicht wird das dadurch, daß die sich gegenüberstehenden Greifplatten 24 und 28, die sich mit ihrer waagerechten Anlagefläche 32 auf den zu öffnenden Folienlagen 12 und 14 abstützen können und deshalb unabhängig von der Foliendicke arbeiten. Gleiches gilt beim Zufassen der Schneiden. Hier stützen sich jeweils die senkrechten Anlageflächen 34 der gegenüberliegenden Greifer aufeinander ab und garantieren ein reproduzierbares Spaltmaß a und verhindern sicher das Durchtrennen der gegriffenen Folie. Die Geometrie der Greifplatte erleichtert durch die asymmetrische keilförmige Ausbildung der Schneide 30 das Eindringen in das Folienmaterial. Das verdrängte Folienmaterial schiebt sich zur einen Hälfte zwischen die Schneiden 30 und kann dadurch leicht gegriffen werden und verklemmt sich als Wulst an dem Hinterschnitt der Schneidenspitzen. Die andere Hälfte schiebt sich unter die Ausnehmung 36 der Greifplatte 24 bzw. 28. Somit wird ein Materialaufbau vermieden, der zur Verfälschung des Spaltmaßes (Foliendicke) führt. Der Kraftaufwand zur Betätigung der Greifergabeln 22 bzw. 26 konnte durch die gezielte Ausformung der Scheidengeometrie merklich reduziert und die Bauform des kompletten Greifersystems 10 auf eine sehr kleine Baugröße mit einer Breite von weniger als 50 mm begrenzt werden. Aufgrund der nur wenigen beweglichen Teile ist die Produktion vergleichsweise einfach und die Herstellkosten sind niedrig und der Betrieb des Folienöffners ist störungsarm.

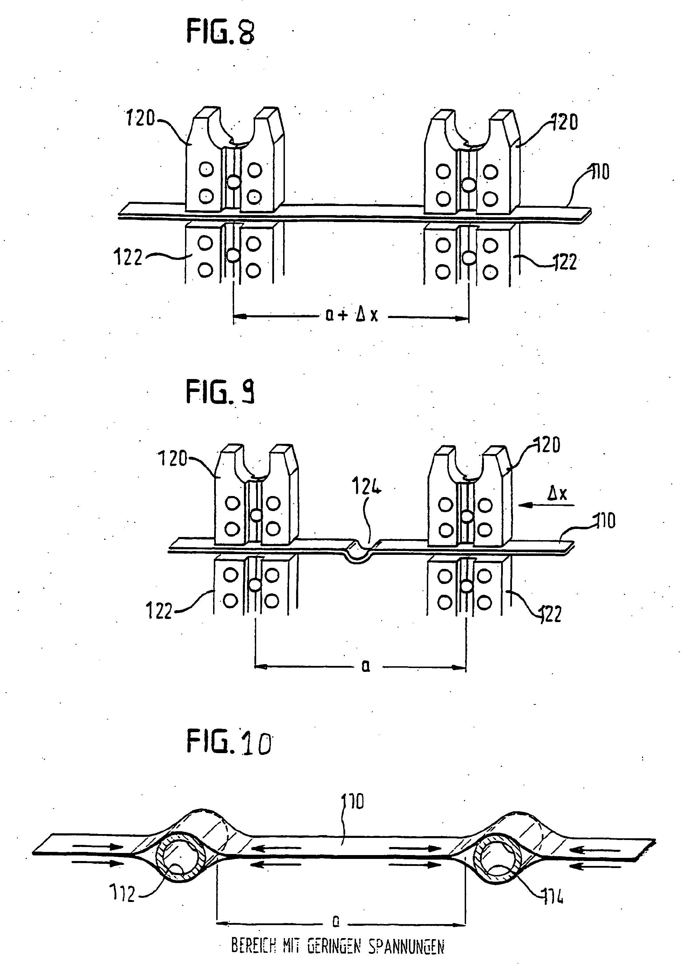

Gemäß Fig. 8 wird eine Schlauchfolienbahn 110 an zwei Stellen von Greiferpaaren 120, 122 erfasst, die um den Abstand a + Δx voneinander entfernt sind.

Die Greifer mit dem jeweiligen Oberwerkzeug 120 und dem Unterwerkzeug 122 entsprechen in Ihrem Aufbau denjenigen gemäß der deutschen Patentanmeldung DE 10247769.8-26 der Anmelderin.

Nach dem in Fig. 8 dargestellten Ergreifen der oberen bzw. unteren Folienlage der Schlauchfolienbahn 110 werden die beiden Greifer mit dem Oberwerkzeug 120 bzw. Unterwerkzeug 122 um eine Längendifferenz Δx aufeinander zubewegt, so dass sich im mittleren Bereich zwischen den beiden Greifern eine Folienseite 124 bildet. Nach entsprechendem Auseinanderziehen der Folien, werden Schläuche 112, 114 in die offenen Bereiche eingebracht. Wie in Fig. 10 vereinfacht dargestellt, sind die Folienbereiche, die um die Schläuche 112 und 114 aufgezogen sind vergleichsweise eng an das Schlauchäußere der Schläuche 112 und 114 angeschmiegt, so dass beim entsprechenden Umfassen der Schläuche mit den Schweißwerkzeugen zum Verschweißen der Folien 110 mit den Schläuchen 112 und 114 nur wenig Folienmaterial benötigt wird. Dieses Material wird aus der Folienfalte 124 geliefert, so dass zwischen den beiden Schläuchen 112 und 114 ein Bereich mit geringen Spannungen vorliegt. Gemäß dem erfindungsgemäßen Verfahren wird beim Einformvorgang der Folie um die Schläuche berücksichtigt, dass durch lokales Öffnen von unverschweißten Folienbereichen und einem anschließenden Raffvorgang bereits ein Einziehen der Folie aus den Randbereichen ermöglicht wird. Die nur schmal vorgesehene Öffnung je Schlauch im Beutel bzw. der Schlauchfolienbahn sorgt für ein enges Anschmiegen der Folie an der Schlauchwand nach dem Einschieben der Schläuche. Dadurch kann die einseitige Ausdehnung der Folie beim Schließen der Schweißwerkzeuge, die in der Fig. 10 nicht dargestellt sind, weitgehend vermieden werden.

## Patentansprüche

1. Verfahren zum Einformen von mindestens zwei Schläuchen (112, 114) oder Ports in eine Schlauchfolienbahn (16, 110) mit einer oberen Folienlage (12) und einer unteren Folienlage (14) mit folgenden Schritten:
a) Erfassen der einzelnen Folienlagen (12, 14) mit je einem Greifer (10) mit jeweils einem Oberwerkzeug (18, 120) zum Greifen der oberen Folienlage (12) und jeweils einem Unterwerkzeug (20, 122) zum Greifen der unteren Folienlage (14) an den Stellen, an denen ein Schlauch (112, 114) oder Port eingeformt werden soll;
b) Auseinanderziehen der Folienlagen (12, 14) mittels Ober- und Unterwerkzeug (18, 120; 20, 122) des jeweiligen Greifers (10) an den vorgenannten Stellen, wobei die obere Folienlage (12) von der unteren Folienlage (14) getrennt wird;
c) Aufeinanderzubewegen der benachbarten Greifer (10) um eine bestimmte Länge (Δx), nachdem sie jeweils mit ihrem Oberwerkzeug (18, 120) und mit ihrem Unterwerkzeug (20, 122) die Folienlagen (12, 14) ergriffen haben;
d) Einschieben der Schläuche (112, 114) oder Ports in Bereiche der auseinandergezogenen Folienlagen (12, 14) und
e) Verbinden der Schläuche (112, 114) bzw. Ports mit den Folienlagen (12, 14).

2. Verfahren nach Anspruch 1, **dadurch gekennzeichnet, dass** die Schläuche (112, 114) bzw. Ports mit den Folienlagen (12, 14) über eine Schweißverbindung miteinander verbunden werden.

3. Verfahren nach einem der Ansprüche 1 oder 2, **dadurch gekennzeichnet, dass** zwei benachbarte Greifer (10) mit ihrem Oberwerkzeug (18, 120) bzw. Unterwerkzeug (20, 122) die Folienlagen (12, 14) in einem Abstand (x+Δx) voneinander ergreifen, der dem späteren gewünschten Abstand (x) zwischen den eingeformten Schläuchen (112, 114) bzw. Ports zuzüglich der Länge (Δx), um die die Greifer (10) aufeinander zubewegt werden sollen, entsprechen.

4. Verfahren nach einem der Ansprüche 1 - 3, **dadurch gekennzeichnet, dass** die Schlauchfolienbahn (16, 110) vor dem Erfassen der Folienbereiche mit je einem Greifer (10) im wesentlichen schon zu einem Beutel verschweißt sind, wobei die Bereiche, in welchen ein Schlauch (112, 114) oder Port eingeformt werden soll, von der Schweißung ausgenommen sind.

5. Vorrichtung zur Durchführung eines Verfahrens zum Einformen von mindestens zwei Schläuchen (112, 114) oder Ports in eine Schlauchfolienbahn (16, 110) mit einer oberen Folienlage (12) und einer unteren Folienlage (14) mit folgenden Schritten:
a) Erfassen der einzelnen Folienlagen (12, 14) mit je einem Greifer (10) mit jeweils einem Oberwerkzeug (18, 120) zum Greifen der oberen Folienlage (12) und jeweils einem Unterwerkzeug (20, 122) zum Greifen der unteren Folienlage (14) an den Stellen, an denen ein Schlauch (112, 114) oder Port eingeformt werden soll;
b) Auseinanderziehen der Folienlagen (12, 14) mittels Ober- und Unterwerkzeug (18, 120; 20, 122) des jeweiligen Greifers (10) an den vorgenannten Stellen, wobei die obere Folienlage (12) von der unteren Folienlage (14) getrennt wird;
c) Aufeinanderzubewegen der benachbarten Greifer (10) um eine bestimmte Länge (Δx), nachdem sie jeweils mit ihrem Oberwerkzeug (18, 120) und mit ihrem Unterwerkzeug (20, 122) die Folienlagen (12, 14) ergriffen haben;
d) Einschieben der Schläuche (112, 114) oder Ports in Bereiche der auseinandergezogenen Folienlagen (12, 14) und
e) Verbinden der Schläuche (112, 114) bzw. Ports mit den Folienlagen (12, 14), wobei die Greifer (10) mit ein Oberwerkzeug (18, 120) und ein Unterwerkzeug (20, 122) zum Ergreifen der Folienlagen (12, 14) im Randbereich des Beutels, sowie Schweißbacken zum Verschweißen der Folienlagen (12, 14) mit den Schläuchen (112, 114) bzw. Ports aufweisen.

## Claims

1. A method of moulding at least two hoses (112, 114) or ports into a hose film web (16, 110) having an upper film layer (12) and a lower film layer (14) comprising the following steps:
a) gripping the individual film layers (12, 14) with a respective gripper (10) having a respective upper tool (18, 120) for gripping the upper film layer (12) and a respective lower tool (20, 122) for gripping the lower film layer (14) at the points at which a hose (112, 114) or port is to be moulded;
b) drawing apart the film layers (12, 14) by means of the upper and lower tools (18, 120; 20, 122) of the respective gripper (10) at the aforesaid points, with the upper film layer (12) being separated from the lower film layer (14);
c) moving the adjacent grippers (10) towards one another by a specific length (Δx) after they have each gripped the film layers (12, 14) with their upper tool (18, 120) and with their lower tool (20, 122);
d) pushing the hoses (112, 114) or ports into regions of the drawn-apart film layers (12, 14); and
e) connecting the hoses (112, 114) or ports to the film layers (12, 14).

2. A method in accordance with claim 1, **characterised in that** the hoses (112, 114) or ports having the film layers (12, 14) are connected to one another via a weld connection.

3. A method in accordance with one of the claims 1 or 2, **characterised in that** two adjacent grippers (10) grip the film layers (12, 14) with their upper tool (18, 120) or lower tool (20, 122) at a spacing (x+Δx) from one another which corresponds to the later desired spacing (x) between the moulded hoses (112, 114) or ports plus the length (Δx) by which the grips (10) are to be moved towards one another.

4. A method in accordance with one of the claims 1 to 3, **characterised in that** the hose film web (16, 110) are essentially already welded together before the gripping of the film regions by a respective gripper (10), with the regions in which a hose (112, 114) or port are to be moulded being excepted from the welding.

5. An apparatus for carrying out a method for moulding at least two hoses (112, 114) or ports into a hose film web (16, 110) having an upper film layer (12) and a lower film layer (14) comprising the following steps:
a) gripping the individual film layers (12, 14) with a respective gripper (10) having a respective upper tool (18, 120) for gripping the upper film layer (12) and a respective lower tool (20, 122) for gripping the lower film layer (14) at the points at which a hose (112, 114) or port is to be moulded;
b) drawing apart the film layers (12, 14) by means of the upper and lower tools (18, 120; 20, 122) of the respective gripper (10) at the aforesaid points, with the upper film layer (12) being separated from the lower film layer (14);
c) moving the adjacent grippers (10) towards one another by a specific length (Δx) after they have each gripped the film layers (12, 14) with their upper tool (18, 120) and with their lower tool (20, 122);
d) pushing the hoses (112, 114) or ports into regions of the drawn-apart film layers (12, 14); and
e) connecting the hoses (112, 114) or ports to the film layers (12, 14), with the grippers (10) having an upper tool (18, 120) and a lower tool (20, 122) for gripping the film layers (12, 14) in the marginal region of the bag, as well as having welding jaws for welding the film layers (12, 14) to the hoses (112, 114) or ports.

## Revendications

1. Procédé de moulage d'au moins deux gaines (112, 114) ou ports dans un pan de gaines flexibles (16, 110) doté d'une couche supérieure de film (12) et d'une couche inférieure de film (14) avec les étapes suivantes :
a) Saisie de chacune des couches de film (12, 14) avec respectivement une griffe (10) dotée respectivement d'un outil supérieur (18, 120) pour saisir la couche de film supérieure (12) et dotée respectivement d'un outil inférieur (20, 122) pour saisir la couche de film inférieure (14) dans les zones dans lesquelles une gaine (112, 114) ou un port doivent être moulés ;
b) Etirement des couches de film (12, 14) à l'aide des outils supérieur et inférieur (18, 120 ; 20, 122) de la griffe respective (10) dans les zones précitées, la couche de film supérieure (12) étant séparée de la couche de film inférieure (14) ;
c) Déplacement l'une vers l'autre des griffes avoisinantes (10) sur une longueur déterminée (Δx), après qu'elles ont saisi respectivement à l'aide de leur outil supérieur (18, 120) et de leur outil inférieur (20, 122) les couches de film (12, 14) ;
d) Introduction des gaines (112, 114) ou des ports dans les régions des couches de film étirées (12, 14) et
e) Jonction des gaines (112, 114) ou des ports avec les couches de film (12, 14).

2. Procédé selon la revendication 1, **caractérisé en ce que** les gaines (112, 114) ou les ports avec les couches de film (12, 14) sont reliés les uns avec les autres par l'intermédiaire d'un joint soudé.

3. Procédé selon une quelconque des revendications 1 ou 2, **caractérisé en ce que** deux griffes avoisinantes (10) saisissent avec leur outil supérieur (18, 120) ou leur outil inférieur (20, 122) les couches de films (12, 14) à une distance (x + Δx) l'une de l'autre, qui correspond à la distance souhaitée ultérieure (x) entre les gaines formées (112, 114) ou les ports plus la longueur(Δx), de laquelle les griffes (10) doivent être déplacées les unes vers les autres.

4. Procédé selon une quelconque des revendications 1 à 3, **caractérisé en ce que** le pan de gaines flexibles (16, 110) est déjà principalement soudé à un sachet avant la saisie des régions de films avec une griffe respective (10), les régions, dans lesquelles une gaine (112, 114) ou un port doivent être moulés, étant dispensées de la soudure.

5. Dispositif destiné à l'exécution d'un procédé de moulage d'au moins deux gaines (112, 114) ou ports dans un pan de gaines flexibles (16, 110) doté d'une couche supérieure de film (12) et d'une couche inférieure de film (14) avec les étapes suivantes :
a) Saisie de chacune des couches de film (12, 14) avec respectivement une griffe (10) dotée respectivement d'un outil supérieur (18, 120) pour saisir la couche de film supérieure (12) et dotée respectivement d'un outil inférieur (20, 122) pour saisir la couche de film inférieure (14) dans les zones dans lesquelles une gaine (112, 114) ou un port doivent être moulés ;
b) Etirement des couches de film (12, 14) à l'aide des outils supérieur et inférieur (18, 120 ; 20, 122) de la griffe respective (10) dans les zones précitées, la couche de film supérieure (12) étant séparée de la couche de film inférieure (14) ;
c) Déplacement l'une vers l'autre des griffes avoisinantes (10) sur une longueur déterminée (Δx), après qu'elles ont saisi respectivement à l'aide de leur outil supérieur (18, 120) et de leur outil inférieur (20, 122) les couches de film (12, 14) ;
d) Introduction des gaines (112, 114) ou des ports dans les régions des couches de film étirées (12, 14) et
e) Jonction des gaines (112, 114) ou des ports avec les couches de film (12, 14), les griffes (10) présentant un outil supérieur (18, 120) et un outil inférieur (20, 122) pour saisir les couches de film (12, 14) dans la région de bordure du sachet, ainsi que des mâchoires de soudure pour souder les couches de film (12, 14) avec les gaines (112, 114) ou les ports.
